# EUROPÄISCHE PATENTSCHRIFT

(11) **EP 2 882 142 B1**
(45) Veröffentlichungstag und Bekanntmachung des Hinweises auf die Patenterteilung: **13.03.2019**
(21) Anmeldenummer: 14196912.1
(22) Anmeldetag: 09.12.2014
(51) Int. Cl.: H04L 12/28, G06F 11/14

(54) **Verfahren zum Betreiben eines Heimautomatisierungssystems**
Method for operating a home automation system
Procédé de fonctionnement d'un système d'automatisation domestique

(30) Priorität: 09.12.2013 DE 102013019966
(43) Veröffentlichungstag der Anmeldung: 10.06.2015
(73) Patentinhaber: ARCA Beteiligungen GmbH, 46414 Rhede (DE)
(72) Erfinder: Burdack, Frank, 46397 Bocholt (DE); Milde, Per-Michael, 46325 Borken (DE)
(74) Vertreter: Gottschald, Jan

(56) Entgegenhaltungen:
- US-A1- 2005 010 835
- US-A1- 2007 078 910
- US-A1- 2011 112 690
- US-B1- 8 060 473
- JAMES DA SILVA & ÓLAFUR GUÐMUNDSSON: "The Amanda Network Backup Manager", USENIX,, 17. Dezember 2008 (2008-12-17), Seiten 1-13, XP061012157, [gefunden am 2008-12-17]

## Beschreibung

Die Erfindung betrifft ein Verfahren zum Betreiben eines Heimautomatisierungssystems gemäß dem Oberbegriff von Anspruch 1.

Moderne Heimautomatisierungssysteme umfassen regelmäßig eine Vielzahl von Peripherievorrichtungen, wie Motoren zum Bewegen von Rollläden oder Markisen, Gurtwickler, Sonnensensoren, Dimmaktoren für Beleuchtungsvorrichtungen, Türkontaktsensoren, Heizkörperstellantriebe und potenziell viele weitere derartiger Komponenten, welche als Module weitgehend flexibel zu einem einzelnen Heimautomatisierungssystem zusammengefügt werden können. Regelmäßig ist dann eine Zentralsteuervorrichtung vorhanden, welche mittelbar oder unmittelbar mit diesen Peripherievorrichtungen kommuniziert um sie anzusteuern, sie zu koordinieren, Programmabläufe zu starten oder zu beenden und um insgesamt ein Zusammenspiel der Peripherievorrichtungen nach den Wünschen des Benutzers zu gewährleisten. Die Zentralsteuervorrichtung kann dabei mit den Peripherievorrichtungen über ein drahtgebundenes oder drahtloses Netzwerk, welches z. B. auf dem Z-Wave Standard basieren kann, kommunizieren.

Die Zentralsteuervorrichtung weist dabei regelmäßig - neben einer möglichen Bedienoberfläche an der Zentralsteuervorrichtung selbst - die Möglichkeit auf, eine nachrichtentechnische Verbindung zu einem externen Bediengerät, welches hier auch als Client-Gerät bezeichnet wird, herzustellen und auf diesem Wege von einem Benutzer bedient zu werden. Als Client-Gerät in diesem Sinne kommen neben speziell hierzu eingerichteten elektronischen Geräten sowohl Smartphones als auch Personalcomputer infrage, bei denen die Bedienoberfläche durch ein auf die Zentralsteuervorrichtung zugeschnittenes Computerprogramm, welches auch als Bedienanwendung bezeichnet werden kann, bereitgestellt wird. Im Kontext von Smartphones kann eine solche Bedienanwendung auch herunterladbar und als App zu bezeichnen sein. Die Verbindung zwischen dem Client-Gerät und der Zentralsteuervorrichtung kann dabei sowohl über ein lokales Netzwerk, bei welchem es sich auch um ein drahtloses lokales Netzwerk handeln kann, oder - sofern die Zentralsteuervorrichtung eine Verbindung mit dem Internet herstellen kann - auch über das Internet hergestellt werden.

Die besagte Flexibilität in der Kombination von Peripherievorrichtungen zu einem Heimautomatisierungssystem, welches dann von der Zentralsteuervorrichtung gesteuert wird, ist einerseits vorteilhaft und notwendig, um der Vielfalt der Gegebenheiten, Wünsche und Möglichkeiten in und bei Privathäusern gerecht zu werden. Mit dieser Flexibilität geht aber auch einher, dass die Konfiguration der Zentralsteuervorrichtung und aller Peripherievorrichtungen, welche dann regelmäßig als Konfigurationsparametersatz in der Zentralsteuervorrichtung hinterlegt wird, sowohl zeitaufwendig ist als auch zu einer relativ großen Datenmenge an Konfigurationsdaten führt. Wenn dann der Fall eintritt, dass die Zentralsteuervorrichtung vorübergehend oder dauerhaft defekt ist und deshalb auf den in der Zentralsteuervorrichtung hinterlegten Konfigurationsparametersatz nicht mehr zugegriffen werden kann, muss häufig die zeitaufwendige Konfiguration vollständig wiederholt werden, was je nach Komplexität insgesamt mehrere Stunden dauern kann.

Zwar ist es auch grundsätzlich bekannt, bei einer solchen Zentralsteuervorrichtung die Möglichkeit einer Übertragung der Konfigurationsparameter an das Client-Gerät und einer Datensicherung auf dem Client-Gerät vorzusehen. Jedoch setzt dies nach dem Stand der Technik entweder voraus, dass der Benutzer eine solche Datensicherung von sich aus startet oder dass eine Anfrage etwa mittels eines Pop-ups an den Benutzer gerichtet wird, welche der Benutzer dann positiv für ein Durchführen der Datensicherung beantworten muss. Die Erfahrung hat gezeigt, dass beide Herangehensweisen zu einer sehr niedrigen Rate an tatsächlich durchgeführten Datensicherungen führen, sodass häufig die Notwendigkeit der oben beschriebenen vollständigen Neukonfiguration des Heimautomationssystems nach einem Defekt oder Ausfall der Zentralsteuervorrichtung auftritt.

Aus der US 2011/0112690 A1 ist ein Heimautomatisierungssystem mit mehreren, verteilten Steuermodulen bekannt, welches einerseits durch einfache Eingabegeräte mit sehr geringem Energieverbrauch, z.B. durch einfache Schalter, oder durch Einloggen auf einem Steuermodul mit einem Webbrowser bedient werden kann. Konfigurationsparameter werden dabei nur verteilt in den Steuermodulen gespeichert und auf das Gerät, auf dem der Webbrowser abläuft, nur vorübergehend übertragen um Datendoppelbestände zu vermeiden.

Der Aufsatz "The Amanda Network Backup Manager" von James da Silva und Olafur Guthmundsson beschreibt eine Software Suite um nächtliche Datensicherungen eines Systems mit mehreren Gigabyte auf einem Bandlaufwerk auszuführen.

Die US 2005/0010835 A1 beschreibt ein System zum Ausführen von Datensicherungen eines Computerhosts welches ohne Installation der Datensicherungssoftware auf dem Computerhost auskommt.

Vor diesem Hintergrund besteht die Aufgabe der Erfindung darin, ein Verfahren zum Betreiben eines Heimautomatisierungssystems bereitzustellen, bei dem das Risiko verringert ist, dass bei einem Ausfall der Zentralsteuervorrichtung des Heimautomatisierungssystems oder einem sonstigen Verlust der in der Zentralsteuervorrichtung hinterlegten Konfigurationsparameter eine Neukonfiguration durchgeführt werden muss.

Diese Aufgabe wird bezogen auf ein Verfahren zum Betreiben eines Heimautomatisierungssystems gemäß dem Oberbegriff von Anspruch 1 durch die Merkmale des kennzeichnenden Teils von Anspruch 1 gelöst.

Die abhängigen Unteransprüche 2-9 definieren Ausführungsbeispiele.

Wesentlich für die Erfindung ist die Erkenntnis, dass eine aktuell bleibende Datensicherung der Konfigurationsparameter der Zentralsteuervorrichtung viel zuverlässiger dadurch erreicht werden kann, dass das Übertragen des Konfigurationsparametersatzes von der Zentralsteuervorrichtung an das Client-Gerät bedieneingabenunabhängig ausgelöst wird. Auf diese Weise ist ein aktives Auslösen oder ein ausdrückliches Erlauben durch den Benutzer - was bisher das regelmäßige Hindernis für die zuverlässige Datensicherung darstellte - nicht mehr erforderlich. Eine solche ausdrückliche Zustimmung des Benutzers wird unter Gesichtspunkten des Datenschutzes auch dadurch entbehrlich, dass der Konfigurationsparametersatz dann an ein Client-Gerät übertragen wird, welches zu der Sphäre des Benutzers gehört.

Wenn nun die Konfigurationsparameter in der Zentralsteuervorrichtung verloren gehen oder die Zentralsteuervorrichtung selbst ausfällt, ist mit größerer Wahrscheinlichkeit eine Datensicherung des aktuellen Konfigurationsparametersatzes vorgenommen worden.

Weitere Einzelheiten, Merkmale, Ziele und Vorteile der vorliegenden Erfindung werden nachfolgend anhand der Zeichnung eines bevorzugten Ausführungsbeispiels erläutert. In der Zeichnung zeigt:

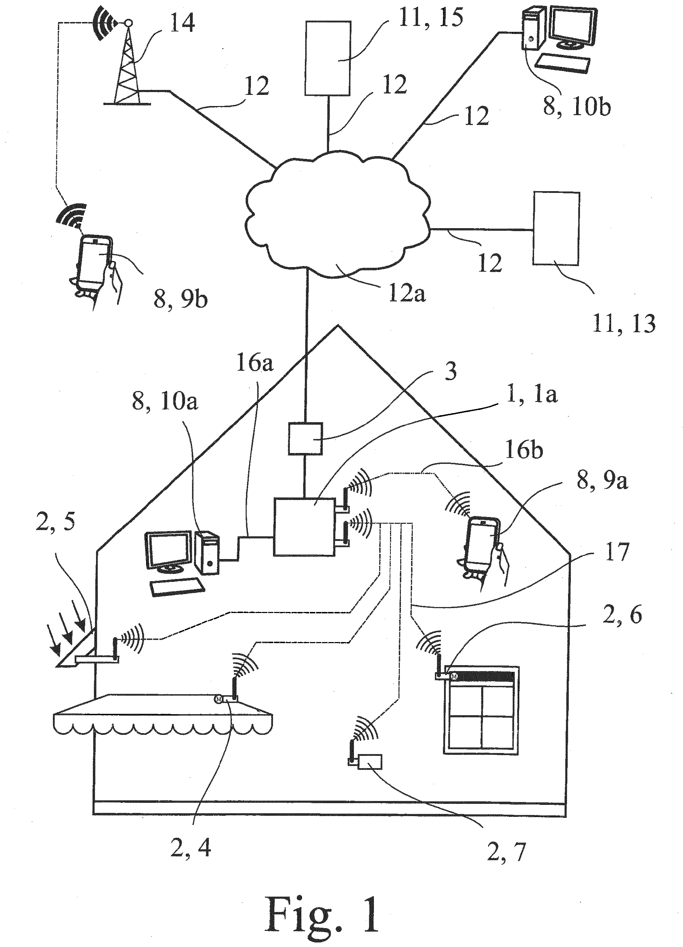

- Fig. 1: eine schematische Ansicht eines vorschlagsgemäßen Heimautomatisierungssystems.

Das vorschlagsgemäße Verfahren dient zum Betreiben eines Heimautomatisierungssystems, wie es gemäß einem Ausführungsbeispiel in der Fig. 1 dargestellt ist. Dieses Heimautomatisierungssystem weist eine Zentralsteuervorrichtung 1 und Peripherievorrichtungen 2 auf. In diesem Beispiel handelt es sich bei der Zentralsteuervorrichtung 1 um eine elektronische Modulbox 1a. Diese weist lediglich einige Tasten und keinen Bildschirm als Bedienoberfläche auf. Denkbar ist aber auch, dass die Zentralvorrichtung 1 auch eine umfangreichere Bedienoberfläche aufweist. Die Zentralsteuervorrichtung 1 ist mit einem Router 3 verbunden und entweder selbst oder über diesen Router 3 zur drahtlosen und drahtgebundenen Kommunikation, speziell über WLAN, wobei hier beispielhaft ein Standard nach IEEE 802.11 gemeint ist, über ein Z-Wave basiertes Netzwerk und über Ethernet in der Lage. Prinzipiell kann die Zentralsteuervorrichtung 1 auch mehrere Komponenten in verschiedenen Gehäusen umfassen, was auch für jede einzelne Peripherievorrichtung 2 gelten kann.

Im vorliegenden Beispiel umfassen die Peripherievorrichtungen 2 einen Markisenmotor 4, einen Sonnensensor 5, einen Rollladenmotor 6 sowie einen Dimmaktor 7, welche allesamt zur drahtlosen Kommunikation mit der Zentralsteuervorrichtung 1 über ein Z-Wave basiertes Netzwerk eingerichtet sind. Alternativ kann auch ein - bevorzugt drahtloses - Netzwerk nach einem anderen Standard vorgesehen sein, wobei es sich auch um einen geschlossenen bzw. proprietären Standard handeln kann.

Vorschlagsgemäß sind entsprechend die Peripherievorrichtungen 2 mit der Zentralsteuervorrichtung 1 nachrichtentechnisch verbindbar und von dieser ansteuerbar. Bevorzugt kann die Kommunikation zwischen der jeweiligen Peripherievorrichtung 2 und der Zentralsteuervorrichtung 1 in beiden Richtungen erfolgen.

Weiter ist vorschlagsgemäß vorgesehen, dass ein Konfigurationsparametersatz für die Ansteuerung der Peripherievorrichtungen 2 in der Zentralsteuervorrichtung 1 hinterlegt ist und dass der Konfigurationsparametersatz von der Zentralsteuervorrichtung 1 an ein Client-Gerät 8, welches für eine Bedienung der Zentralsteuervorrichtung 1 eingerichtet ist, über eine nachrichtentechnische Verbindung übertragen wird. Ein solcher Konfigurationsparametersatz umfasst einen oder mehrere Konfigurationsparameter.

Vorliegend sind Konfigurationsparameter Daten, welche als Parameter die Ansteuerung oder Funktionsweise der Peripherievorrichtungen 2 bestimmen. Darunter fallen etwa definierte Zeitpunkte, zu denen bestimmte Ansteuerungen erfolgen sollen wie auch die Dauer und/oder Intensität dieser Ansteuerungen. Für einstellbare Beleuchtungsvorrichtungen kann z. B. die Beleuchtungsintensität spezifiziert werden. Ebenso zählen komplexe, vordefinierte Abläufe solcher Ansteuerungen ebenfalls zu den Konfigurationsparametern ebenso wie eingemessene Werte, welche etwa bei einer Initialisierung einer Peripherievorrichtung ermittelt werden und dann die Grundlage für die nachfolgende Ansteuerung bilden. Für Heizungs- oder Klimaanlagensteuerungen können Temperaturwerte oder deren Verläufe und für Alarm- oder sonstige Anlagen Identität und Anzahl autorisierter Personen zu den Konfigurationsparametern zählen. Zu den übergreifenden Konfigurationsparametern kann wiederum die Aufführung der vorgesehenen Peripherievorrichtungen mit ihren jeweiligen Kennungen und Adressen im nachrichtentechnischen Sinne zählen. Bevorzugt sind die Konfigurationsparameter innerhalb des Konfigurationsparametersatzes verschlüsselt.

Abzugrenzen sind diese Konfigurationsparameter als Daten von dem Programmcode, welcher von der Zentralsteuervorrichtung 1 zur Ansteuerung der Peripherievorrichtung 2 oder von der Peripherievorrichtung 2 selbst ausgeführt werden kann. Ebenso zählen, ggf. über einen Zeitraum hinweg, ermittelte Sensordaten und Messwerte, die nicht die Grundlage für eine Ansteuerung bilden, sondern etwa nur zu Überwachungszwecken gespeichert werden, nicht zu den Konfigurationsparametern im vorliegenden Sinne.

Bei dem Client-Gerät 8 kann es sich um eine beliebige elektronische Vorrichtung handeln, welche über eine nachrichtentechnische Verbindung die Bedienung der Zentralsteuervorrichtung 1 erlaubt und den Konfigurationsparametersatz von der Zentralsteuervorrichtung 1 empfangen kann. Im vorliegenden Ausführungsbeispiel sind Smartphones 9a, b und Personalcomputer 9a, b als Client-Geräte 8 dargestellt. Speziell zur Verwirklichung dieser Bedienung der Zentralsteuervorrichtung 1 kann vorgesehen sein, dass eine Bedienanwendung im obigen Sinne auf einem der Client-Geräte 8 abläuft. Dabei kann sowohl eine einzelne, plattformunabhängige solche Bedienanwendung für alle oder für eine Vielzahl von unterschiedlichen Client-Geräten 8 als auch eine jeweils unterschiedliche Bedienanwendung, z. B. für die Smartphones 9a, b und für die Personalcomputer 10a, b, vorgesehen sein. Ferner kann einerseits diese Bedienanwendung der softwaretechnische Empfänger des übertragenen Konfigurationsparametersatzes im Client-Gerät 8 sein. Andererseits kann auch eine reine Empfangsanwendung zum Ablauf auf dem Client-Gerät 8 für den Empfang des Konfigurationsparametersatzes vorgesehen sein. Diese Empfangsanwendung kann dann etwa als Hintergrundprozess ablaufen, welcher automatisch gestartet wird und im Wesentlichen stets abläuft, aber dem Benutzer durch das Client-Gerät 8 nicht unmittelbar angezeigt wird. Statt einer speziellen Bedienanwendung kann die Bedienung der Zentralvorrichtung 1 aber auch durch einen Webbrowser erfolgen, worauf unten stehend noch näher eingegangen wird. Der Begriff der nachrichtentechnischen Verbindung ist vorliegend weit auszulegen und umfasst alle Arten der Datenübertragung zwischen verschiedenen Vorrichtungen. Hier ist vorzugsweise vorgesehen, dass diese nachrichtentechnische Verbindung eine verschlüsselte Übertragung gewährleisten kann.

Das vorschlagsgemäße Verfahren ist nun dadurch gekennzeichnet, dass die Übertragung des Konfigurationsparametersatzes an das Client-Gerät 8 bedieneingabenunabhängig ausgelöst wird. Das bedeutet, dass sowohl der Zeitpunkt der Übertragung ausgewählt als auch die Übertragung als solche durchgeführt wird, ohne dass eine Bedieneingabe des Benutzers entweder an das Client-Gerät 8 oder an die Zentralsteuervorrichtung 1, ob nun mittelbar oder unmittelbar, hier eine Rolle spielt. Zeitpunkt und Anlass der Übertragung werden also durch einen internen Vorgang der des Client-Geräts 8 oder der Zentralsteuervorrichtung 1, ggf. im Zusammenspiel miteinander oder mit den Peripherievorrichtungen 2, bestimmt.

Bevorzugt wird also die Übertragung bedieneingabenunabhängig von der Zentralsteuervorrichtung 1 und/oder von dem Client-Gerät 8 ausgelöst. Dabei kann ein Auslösen der Übertragung von dem Client-Gerät 8 auch dadurch erfolgen, dass das Client-Gerät 8 eine entsprechende Aufforderungsnachricht an die Zentralsteuervorrichtung 1 sendet. Eine Bedieneingabe kommt hier allenfalls insoweit infrage, dass die ursprüngliche Inbetriebnahme der Zentralsteuervorrichtung 1 an sich mit der Aktivierung der entsprechenden Funktionalität auf eine Bedieneingabe im weitesten Sinne zurückgeht. Für jede individuelle Übertragung des Konfigurationsparametersatzes ist jedoch - wie festgestellt - keine Bedieneingabe vorgesehen.

Vorschlagsgemäß wird nach der Übertragung des Konfigurationsparametersatzes an das Client-Gerät 8 von dem Client-Gerät 8 eine Datensicherung durchgeführt, was bedeutet, dass der Konfigurationsparametersatz von dem Client-Gerät 8 gespeichert wird. Prinzipiell kann das auch auf einem externen Speicher erfolgen, bevorzugt ist jedoch, dass der Konfigurationsparametersatz im Client-Gerät 8 gespeichert und damit hinterlegt wird.

Vorschlagsgemäß nimmt das Client-Gerät 8 die Datensicherung des übertragenen Konfigurationsparametersatzes bedieneingabenunabhängig vornimmt. Der Begriff bedieneingabenunabhängig ist dabei im obigen Sinne zu verstehen. Diese Datensicherung kann beispielsweise durch die obige Bedienanwendung oder die obige Empfangsanwendung ausgeführt werden.

Um ggf. auch mittlerweile überschriebene Konfigurationsparametersätze auch wieder herstellen zu können, ist es bevorzugt vorgesehen, dass die Datensicherung des Konfigurationsparametersatzes durch das Client-Gerät 8 eine Versionsverwaltung des Konfigurationsparametersatzes umfasst. Auf diese Weise wird es ermöglicht, auch einen älteren, also nicht mehr notwendigerweise aktuellen Konfigurationsparametersatz wiederherzustellen. Diese Versionsverwaltung kann dabei auch das teilweise Auslagern der durch die Datensicherung gesicherten Konfigurationsparametersätze auf externe Datenspeicher, z. B. auf ein externes Speichermedium oder in einen Internet- oder Cloudspeicher, durch das Client-Gerät 8 umfassen.

Der gesamte Vorgang kann nicht nur unabhängig vom Benutzer - also bedieneingabenunabhängig - ausgelöst werden, sondern auch zunächst für den Bediener unmerklich erfolgen. Hierzu ist bevorzugt vorgesehen, dass die Übertragung der Konfigurationsparameter an das Client-Gerät 8 bedienausgabenfrei erfolgt. Das bedeutet, dass mit diesem Vorgang keine optische, akustische oder sonstige Ausgabe auf dem Client-Gerät 8 und insbesondere durch die Bedienanwendung zur Signalisierung der Übertragung erfolgt. Bevorzugt ist die Übertragung auch bedienausgabenfrei hinsichtlich der Zentralsteuervorrichtung 1. Vorzugsweise erfolgt auch das Vornehmen der Datensicherung des Konfigurationsparametersatzes durch das Client-Gerät 8 im selben Sinne bedienausgabenfrei. Das ist vor allem dann gewährleistet, wenn der Empfang des Konfigurationsparametersatzes und die Datensicherung durch die obige Empfangsanwendung ausgeführt werden.

Bevorzugt ist, dass der Konfigurationsparametersatz benutzerdefinierte Konfigurationsparameter umfasst. Das sind also Konfigurationsparameter, welche mittelbar oder unmittelbar auf eine Eingabe durch den Benutzer zurückgehen. Hiervon zu unterscheiden sind etwa Hardwarekennungen oder Netzwerkkennungen der Peripherievorrichtungen 2, da diese entweder produktionsbedingt oder durch die Netzwerkverwaltung vorgegeben werden. Ebenso wenig gehören zu den benutzerdefinierten Konfigurationsparametern Werte, die etwa in einem Einmessvorgang bei einer Initialisierung ermittelt wurden.

Regelmäßig ist es so, dass nicht immer oder noch nicht einmal meistens die nachrichtentechnische Verbindung zwischen der Zentralsteuervorrichtung 1 und dem Client-Gerät 8 besteht. Das kann daran liegen, dass sich das Client-Gerät 8 außerhalb der Reichweite eines entsprechenden Netzwerkes befindet oder daran, dass das Client-Gerät 8 ausgeschaltet ist oder - falls zur nachrichtentechnischen Verbindung erforderlich - die Bedienanwendung auf dem Client-Gerät 8 aktuell nicht abläuft. Daher wird vorzugsweise die Übertragung der Konfigurationsparameter an das Client-Gerät 8 basierend darauf ausgelöst, ob eine nachrichtentechnische Verbindung der Zentralsteuervorrichtung 1 mit einem Empfangsgerät 11 besteht. Vorzugsweise handelt es sich bei dem Empfangsgerät 11 um das Client-Gerät 8. Grundsätzlich kann das Empfangsgerät 11 aber auch ein anderes Gerät sein, von welchem der Konfigurationsparametersatz dann an das Client-Gerät 8 weitergesendet werden kann. Auf diese Weise kann ein Absenden des Konfigurationsparametersatzes an das Client-Gerät 8, ggf. mit einer verzögerten Übertragung entsprechend einer "Zwischenlagerung", auch dann stattfinden, wenn aktuell keine nachrichtentechnische Verbindung mit dem Client-Gerät 8 besteht, sondern die nachrichtentechnische Verbindung nur mit einem Empfangsgerät 11 gegeben ist, welches dann seinerseits die Weiterleitung an das Client-Gerät 8 übernimmt. Nach einer weiteren Variante kann diese Übertragung des Konfigurationsparametersatzes an das Client-Gerät 8 auch von diesem Empfangsgerät 11 ausgelöst werden.

Eine mögliche Art der nachrichtentechnischen Verbindung ist eine Internetverbindung 12. Daher ist es bevorzugt, dass die nachrichtentechnische Verbindung mit dem Client-Gerät 8 und/oder mit dem Empfangsgerät 11 eine Internetverbindung 12 umfasst. Eine solche Internetverbindung 12 ist hier und vorzugsweise eine nachrichtentechnische Verbindung, welche zumindest teilweise durch das hier stark vereinfacht dargestellte Internet 12a verläuft.

Bei einer ersten möglichen Variante ist dabei ein über das Internet 12a erreichbarer Anwendungsserver 13 vorgesehen. Auf dem Anwendungsserver 13 läuft eine Serveranwendung zur Bedienung der Zentralsteuervorrichtung 1 ab. Die Serveranwendung kann zu diesem Zweck eine über einen Webbrowser aufrufbare Internetseite bereitstellen, wobei dieser Webbrowser dann auf dem Client-Gerät 8 ausgeführt werden kann. Die Bedienung der Zentralsteuervorrichtung 1 erfolgt dann mittelbar über den Webbrowser des Client-Geräts 8. Alternativ kommuniziert die Serveranwendung - ebenfalls über das Internet 12a - mit der oben beschriebenen Bedienanwendung, welche ebenfalls auf dem Client-Gerät 8 ablaufen kann. Die Serveranwendung kommuniziert in beiden Fällen dann ihrerseits, in der Regel ebenfalls über das Internet 12a, mit der Zentralsteuervorrichtung 1. Das kann etwa dadurch erfolgen, dass die Zentralsteuervorrichtung 1 stets oder regelmäßig eine Verbindung zu dem Anwendungsserver 13 herstellt, z. B. mittels des HTTP-Protokolls. Hier kann auch eine sichere Verbindung, z. B. gemäß HTTPS, vorgesehen sein.

Das Client-Gerät 8 kann über seinen eigenen Internetzugang auf diesen Anwendungsserver 13 und die Serveranwendung zugreifen, wobei dieser Internetzugang des Client-Geräts 8 sowohl drahtgebunden als auch, insbesondere im Falle eines mobilen Client-Geräts 8 wie dem Smartphone 9b, auch drahtlos sein und etwa über ein Mobilfunknetzwerk 14 hergestellt werden kann.

Hier ist weiter bevorzugt, dass die nachrichtentechnische Verbindung mit dem Empfangsgerät 11 besteht, auf welchem eine Mailserveranwendung 15 abläuft und bei der der Konfigurationsparametersatz mittels einer E-Mail von der Mailserveranwendung 15 an das Client-Gerät 8 übertragen wird. Somit ist eine nachrichtentechnische Verbindung zwischen der Zentralsteuervorrichtung 1 und dem Empfangsgerät 11 vorgesehen, nicht aber notwendigerweise auch zwischen der Zentralsteuervorrichtung 1 und dem Client-Gerät 8. In der Regel kann die Zentralsteuervorrichtung 1 von sich aus eine solche Internetverbindung 12 zu einem Empfangsgerät 11 mit einer solchen Mailserveranwendung 15 herstellen, wohingegen eine nachrichtentechnische Verbindung zum Client-Gerät 8 aber z. B. davon abhängig ist, dass das Client-Gerät 8 überhaupt eingeschaltet ist.

Bevorzugt ist dabei in der Mailserveranwendung 15 ein Benutzerkonto für den Benutzer der Zentralsteuervorrichtung 1 eingerichtet, sodass die Zentralsteuervorrichtung 1 mittels z. B. eines SMTP-Zugriffs eine E-Mail unter Benutzung dieses Benutzerkontos entweder an ein E-Mail-Postfach dieses selben Benutzerkontos oder an ein anderes E-Mail-Postfach des Benutzers senden kann. Der Konfigurationsparametersatz kann dabei beispielsweise als Anhang dieser E-Mail mitversendet werden. Die E-Mail kann dabei verschlüsselt werden, insbesondere nach einem Public-Key-Verfahren. Bevorzugt ist dann ebenfalls, dass das Client-Gerät 8 diese E-Mail dann in bekannter Weise von dem E-Mail-Postfach herunterladen kann, speziell zur Datensicherung auf dem Client-Gerät 8.

Gemäß einer weiteren, alternativ oder zusätzlich möglichen Variante besteht die nachrichtentechnische Verbindung mit dem Empfangsgerät 11, vorzugsweise mit dem Client-Gerät 8, über ein lokales Netzwerk 16a, b. In der Fig. 1 ist ein als Ethernet-Netzwerk ausgestaltetes solches lokales Netzwerk 16a dargestellt, welches hier den Personalcomputer 10a mit der Zentralsteuervorrichtung 1 verbindet. Ebenso ist ein als WLAN ausgestaltetes und also drahtloses lokales Netzwerk 16b dargestellt, welches das Smartphone 9a mit der Zentralsteuervorrichtung 1 verbindet. Denkbar wäre auch, dass diese jeweilige Verbindung zu der Zentralsteuervorrichtung 1 über den Router 3 hergestellt wird. Grundsätzlich kann dieses lokale Netzwerk 16a, b auch zu dem Netzwerk identisch sein, durch welches die Zentralsteuervorrichtung 1 mit den Peripherievorrichtungen 2 kommuniziert. Im Ausführungsbeispiel der Fig. 1 ist dieses Netzwerk jedoch ein separates Heimnetzwerk 17 auf Basis von Z-Wave.

Die Bedienung der Zentralsteuervorrichtung 1 durch das Smartphone 9a oder den Personalcomputer 10a kann nun einerseits über eine Internetverbindung 12 zum Anwendungsserver 13 erfolgen, wie bereits für das Smartphone 9b und den Personalcomputer 10b beschrieben, da sowohl das Smartphone 9a als auch der Personalcomputer 10a mittels des Routers 3 eine Internetverbindung 12 herstellen können.

Alternativ oder zusätzlich kann eine zu der Serveranwendung auf dem Anwendungsserver 13 identische oder analoge Steueranwendung, welche auch für den Zugriff mittels eines Webbrowsers eingerichtet sein kann, auf der Zentralsteuervorrichtung 1 ablaufen, sodass auch die Zugriffsmöglichkeiten durch das Smartphone 9a und den Personalcomputer 10a sinngemäß gleich sind, wobei das Smartphone 9a und der Personalcomputer 10a aber auch über das lokale Netzwerk 16a, b und also ohne die Notwendigkeit einer Internetverbindung 12 auf die Zentralsteuervorrichtung 1 - und damit auf die Steueranwendung - zugreifen können.

Bezüglich des Auslösens einer Übertragung des Konfigurationsparametersatzes ist es speziell bei einer Änderung der Konfigurationsparameter sinnvoll, für diese eine Datensicherung vorzunehmen. Daher ist es bevorzugt, dass die Übertragung des Konfigurationsparametersatzes an das Client-Gerät 8 basierend darauf ausgelöst wird, ob eine Veränderung des in der Zentralsteuervorrichtung 1 hinterlegten Konfigurationsparametersatzes stattfand. Wenn diese Veränderung durch eine Bedienung mittels des Client-Geräts 8 selbst durchgeführt wurde, kann die Übertragung des Konfigurationsparametersatzes an das Client-Gerät 8 unmittelbar im Anschluss an die Veränderung erfolgen. Bevorzugt erfolgt dann die Übertragung des Konfigurationsparametersatzes unter Verwendung derselben nachrichtentechnischen Verbindung, welche auch für die Bedienung verwendet wurde, mit der die Veränderung des Konfigurationsparametersatzes erfolgte.

Es kann auch sein, dass keine Änderung des Konfigurationsparametersatzes der Zentralsteuervorrichtung 1 erfolgte, dieser also gleich geblieben ist, dafür aber das Client-Gerät 8 entweder ausgetauscht wurde oder hinsichtlich seiner Daten neu aufgesetzt wurde. Auch in so einem Fall weist das Client-Gerät 8 dann keine gültige Datensicherung mehr auf. Vorzugsweise ist daher vorgesehen, dass die Übertragung des Konfigurationsparametersatzes an das Client-Gerät 8 basierend darauf ausgelöst wird, ob ein Konfigurationsparametersatz in dem Client-Gerät 8 hinterlegt ist. Insbesondere wird die Übertragung des Konfigurationsparametersatzes ausgelöst, wenn überhaupt ein Konfigurationsparametersatz auf dem Client-Gerät 8 fehlt, also gar kein Konfigurationsparametersatz auf dem Client-Gerät 8 vorhanden ist. Dies wird durch das Client-Gerät 8 festgestellt

Vorteile ergeben sich, wenn bei einer Änderung des Konfigurationsparametersatzes der Zeitpunkt der Änderung als Zeitstempel auch als Bestandteil des Konfigurationsparametersatzes aufgenommen wird. Auf diese Weise kann bei mehreren Versionen eines Konfigurationsparametersatzes bestimmt werden, welcher Konfigurationsparametersatz aktueller ist. Entsprechend ist es bevorzugt, dass die Übertragung des Konfigurationsparametersatzes an das Client-Gerät 8 basierend auf einem Aktualitätsvergleich des in der Zentralsteuervorrichtung 1 hinterlegten Konfigurationsparametersatzes und eines im Client-Gerät 8 hinterlegten Konfigurationsparametersatzes ausgelöst wird. Speziell kann die Übertragung des Konfigurationsparametersatzes ausgelöst werden, wenn der in der Zentralsteuervorrichtung 1 hinterlegte Konfigurationsparameter aktueller als ein oder alle im Client-Gerät 8 hinterlegten Konfigurationsparametersätze ist.

## Patentansprüche

1. Verfahren zum Betreiben eines Heimautomatisierungssystems mit einer Zentralsteuervorrichtung (1) und Peripherievorrichtungen (2), welche mit der Zentralsteuervorrichtung (1) nachrichtentechnisch verbindbar und von der Zentralsteuervorrichtung (1) ansteuerbar sind, wobei ein Konfigurationsparametersatz für die Ansteuerung der Peripherievorrichtungen (2) in der Zentralsteuervorrichtung (1) hinterlegt ist, wobei der Konfigurationsparametersatz von der Zentralsteuervorrichtung (1) an ein Client-Gerät (8), welches Client-Gerät (8) für eine Bedienung der Zentralsteuervorrichtung (1) eingerichtet ist, über eine nachrichtentechnische Verbindung übertragen wird,
**dadurch gekennzeichnet, dass**
das Client-Gerät (8) als Smartphone ausgestaltet ist,
die Übertragung des Konfigurationsparametersatzes an das Client-Gerät (8) durchgeführt wird,
das Client-Gerät (8) eine Datensicherung des übertragenen Konfigurationsparametersatzes vornimmt,
wobei das Clent-Gerät (8) feststellt, wenn der Konfigurationsparametersatz auf dem Client-Gerät (8) fehlt und
die Übertragung des Konfigurationsparametersatzes an das Client-Gerät basierend darauf ausgelöst wird, ob der Konfigurationsparametersatz in dem Client-Gerät (8) hinterlegt ist.

2. Verfahren nach Anspruch 1, **dadurch gekennzeichnet, dass** die Datensicherung des Konfigurationsparametersatzes durch das Client-Gerät (8) eine Versionsverwaltung des Konfigurationsparametersatzes umfasst.

3. Verfahren nach Anspruch 1 oder 2, **dadurch gekennzeichnet,**
**dass** die Übertragung des Konfigurationsparametersatzes
an das Client-Gerät (8) bedienausgabenfrei erfolgt.

4. Verfahren nach einem der Ansprüche 1 bis 3, **dadurch gekennzeichnet, dass** der Konfigurationsparametersatz benutzerdefinierte Konfigurationsparameter umfasst.

5. Verfahren nach einem der Ansprüche 1 bis 4, **dadurch gekennzeichnet, dass** die Übertragung des Konfigurationsparametersatzes an das Client-Gerät (8) basierend darauf ausgelöst wird, ob eine nachrichtentechnische Verbindung der Zentralsteuervorrichtung (1) mit einem Empfangsgerät (11), besteht.

6. Verfahren nach einem der Ansprüche 1 bis 5, **dadurch gekennzeichnet, dass** die nachrichtentechnische Verbindung mit dem Client-Gerät (8) und/oder mit dem Empfangsgerät (11) eine Internetverbindung (12) umfasst.

7. Verfahren nach einem der Ansprüche 1 bis 6, **dadurch gekennzeichnet, dass** die nachrichtentechnische Verbindung mit dem Empfangsgerät (11) über ein lokales Netzwerk (16a,b) besteht.

8. Verfahren nach einem der Ansprüche 1 bis 7, **dadurch gekennzeichnet, dass** die Übertragung des Konfigurationsparametersatzes an das Client-Gerät (8) basierend darauf ausgelöst wird, ob eine Veränderung des in der Zentralsteuervorrichtung (1) hinterlegten Konfigurationsparametersatzes stattfand.

9. Verfahren nach einem der Ansprüche 1 bis 8, **dadurch gekennzeichnet, dass** die Übertragung des Konfigurationsparametersatzes an das Client-Gerät (8) basierend auf einem Aktualitätsvergleich des in der Zentralsteuervorrichtung (1) hinterlegten Konfigurationsparametersatzes und eines im Client-Gerät (8) hinterlegten Konfigurationsparametersatzes ausgelöst wird.

## Claims

1. Method for operating a home automation system having a central control apparatus (1) and peripherals (2) which can be communicatively connected to the central control apparatus (1) and can be controlled by the central control apparatus (1), wherein a configuration parameter set for controlling the peripherals (2) is stored in the central control apparatus (1), wherein the configuration parameter set is transmitted from the central control apparatus (1) to a client device (8), which client device (8) is set up for operating the central control apparatus (1), via a communicative connection,
**characterized in that**
the client device (8) is in the form of a smartphone, the configuration parameter set is transmitted to the client device (8),
the client device (8) performs a data backup of the transmitted configuration parameter set,
wherein the client device (8) determines when the configuration parameter set is missing on the client device (8), and
the transmission of the configuration parameter set to the client device is triggered on the basis of whether the configuration parameter set is stored in the client device (8).

2. Method according to Claim 1, **characterized in that** the data backup of the configuration parameter set by the client device (8) comprises version management of the configuration parameter set.

3. Method according to Claim 1 or 2, **characterized in that** the configuration parameter set is transmitted to the client device (8) in a manner free of operating outputs.

4. Method according to one of Claims 1 to 3, **characterized in that** the configuration parameter set comprises user-defined configuration parameters.

5. Method according to one of Claims 1 to 4, **characterized in that** the transmission of the configuration parameter set to the client device (8) is triggered on the basis of whether there is a communicative connection between the central control apparatus (1) and a receiving device (11).

6. Method according to one of Claims 1 to 5, **characterized in that** the communicative connection to the client device (8) and/or to the receiving device (11) comprises an Internet connection (12).

7. Method according to one of Claims 1 to 6, **characterized in that** the communicative connection to the receiving device (11) exists via a local area network (16a,b).

8. Method according to one of Claims 1 to 7, **characterized in that** the transmission of the configuration parameter set to the client device (8) is triggered on the basis of whether the configuration parameter set stored in the central control apparatus (1) was changed.

9. Method according to one of Claims 1 to 8, **characterized in that** the transmission of the configuration parameter set to the client device (8) is triggered on the basis of an up-to-dateness comparison of the configuration parameter set stored in the central control apparatus (1) and a configuration parameter set stored in the client device (8).

## Revendications

1. Procédé pour faire fonctionner un système d'automatisation d'habitat, comprenant un dispositif de commande central (1) et des dispositifs périphériques (2) qui peuvent être connectés de manière informatique au dispositif de commande central (1) et qui peuvent être pilotés par le dispositif de commande central (1), un jeu de paramètres de configuration destiné à piloter les dispositifs périphériques (2) étant stocké dans le dispositif de commande central (1), le jeu de paramètres de configuration étant transmis par le biais d'une connexion informatique du dispositif de commande central (1) à un appareil client (8), lequel appareil client (8) est conçu pour une conduite du dispositif de commande central (1),
**caractérisé en ce que**
l'appareil client (8) est configuré sous la forme d'un Smartphone,
la transmission du jeu de paramètres de configuration à l'appareil client (8) est effectuée,
l'appareil client (8) procède à une sécurisation du jeu de paramètres de configuration transmis,
l'appareil client (8) constatant quand le jeu de paramètres de configuration est manquant sur l'appareil client (8) et
la transmission du jeu de paramètres de configuration à l'appareil client étant déclenché en se basant sur le fait que le jeu de paramètres de configuration est stocké dans l'appareil client (8).

2. Procédé selon la revendication 1, **caractérisé en ce que** la sécurisation des données du jeu de paramètres de configuration par l'appareil client (8) comprend une gestion de version du jeu de paramètres de configuration.

3. Procédé selon la revendication 1 ou 2, **caractérisé en ce que** la transmission du jeu de paramètres de configuration à l'appareil client (8) s'effectue sans tâches de conduite.

4. Procédé selon l'une des revendications 1 à 3, **caractérisé en ce que** le jeu de paramètres de configuration comporte des paramètres de configuration définis par l'utilisateur.

5. Procédé selon l'une des revendications 1 à 4, **caractérisé en ce que** la transmission du jeu de paramètres de configuration à l'appareil client (8) est déclenchée en se basant sur le fait qu'il existe une connexion informatique du dispositif de commande central (1) avec un appareil récepteur (11).

6. Procédé selon l'une des revendications 1 à 5, **caractérisé en ce que** la connexion informatique avec l'appareil client (8) et/ou avec l'appareil récepteur (11) comprend une connexion Internet (12).

7. Procédé selon l'une des revendications 1 à 6, **caractérisé en ce que** la connexion informatique avec l'appareil récepteur (11) est établie par le biais d'un réseau local (16a,b).

8. Procédé selon l'une des revendications 1 à 7, **caractérisé en ce que** la transmission du jeu de paramètres de configuration à l'appareil client (8) est déclenchée en se basant sur le fait qu'une modification du jeu de paramètres de configuration stocké dans le dispositif de commande central (1) a eu lieu.

9. Procédé selon l'une des revendications 1 à 8, **caractérisé en ce que** la transmission du jeu de paramètres de configuration à l'appareil client (8) est déclenchée en se basant sur une comparaison de l'actualité du jeu de paramètres de configuration stocké dans le dispositif de commande central (1) et d'un jeu de paramètres de configuration stocké dans l'appareil client (8).
